# EUROPÄISCHE PATENTSCHRIFT

(11) **EP 3 078 535 B1**
(45) Veröffentlichungstag und Bekanntmachung des Hinweises auf die Patenterteilung: **10.04.2019**
(21) Anmeldenummer: 16162840.9
(22) Anmeldetag: 30.03.2016
(51) Int. Cl.: B60K 35/00, G02B 27/01

(54) **VERFAHREN ZUM REINIGEN EINER KOPFOBENANZEIGEEINRICHTUNG EINES KRAFTFAHRZEUGS, KOPFOBENANZEIGEEINRICHTUNG UND KRAFTFAHRZEUG**
METHOD FOR CLEANING A HEADS UP DISPLAY DEVICE OF A MOTOR VEHICLE, MOTOR VEHICLE AND HEADS UP DISPLAY DEVICE
PROCEDE DE NETTOYAGE D'UN DISPOSITIF TETE HAUTE D'UN VEHICULE AUTOMOBILE, DISPOSITIF TETE HAUTE ET VEHICULE AUTOMOBILE

(30) Priorität: 09.04.2015 DE 102015105385
(43) Veröffentlichungstag der Anmeldung: 12.10.2016
(73) Patentinhaber: Valeo Comfort and Driving Assistance, 94046 Créteil Cedex (FR)
(72) Erfinder: Kuntze, Daniel, 74321 Bietigheim-Bissingen (DE); Schoch, Lars, 74321 Bietigheim-Bissingen (DE); Simonis, Karl, 74321 Bietigheim-Bissingen (DE)

(56) Entgegenhaltungen:
- WO-A1-2013/129041
- US-A- 5 025 187
- US-A1- 2010 246 001
- US-A1- 2012 262 667

## Beschreibung

Die Erfindung betrifft ein Verfahren zum Reinigen einer Kopfobenanzeigeeinrichtung eines Kraftfahrzeugs. Es werden bauteilfremde Partikel von zumindest einem Bauteil der Kopfobenanzeigeeinrichtung flüssigkeitslos entfernt und die Kopfobenanzeigeeinrichtung wird dadurch zumindest teilweise gereinigt. Die Erfindung betrifft auch eine Kopfobenanzeigeeinrichtung für ein Kraftfahrzeug sowie ein Kraftfahrzeug mit einer Kopfobenanzeigeeinrichtung.

Verfahren zum flüssigkeitslosen Reinigen einer Anzeigeeinrichtung sind aus dem Stand der Technik bekannt. So wird in der DE 10 2005 025 572 A1 eine selbstreinigende Anzeigeeinrichtung beschrieben, bei welcher eine Abdeckeinrichtung der Anzeigeeinrichtung auf ihrer der Oberfläche der Anzeigeeinrichtung zugewandten Seite mit einer Reinigungseinrichtung zum flüssigkeitsfreien Entfernen von auf der Oberfläche abgelagerten Verschmutzungen versehen ist. Beim Öffnen oder Schließen der Abdeckeinrichtung wird die Oberfläche gereinigt.

Die WO 2013/129041 A1 offenbart ein Head-up-Display, mit den Merkmalen der Oberbegriffe der unabhängigen Ansprüche, dessen erster Zweck darin besteht, eine Blendung des Benutzers zu vermeiden, und deren zweiter Zweck die Implementierung von Gegenmaßnahmen für Verschmutzungen ist. Wenn Sand oder Staub durch eine Öffnung in den Gehäusekörper eindringt, kann verhindert werden, dass sich dieser Sand oder Staub darin sammelt, da ein Öffnungsloch im Bodenteil des Gehäusekörpers vorgesehen ist. Um zu verhindern, dass direkt an einem Anzeigeelement und einem reflektierenden Element Sand oder Staub anhaftet, werden Abdeckelemente auf der Vorderseite des Anzeigeelements und auf der Vorderseite des reflektierenden Elements vorgesehen, so dass ein Abstreifen des Sandes oder Staubes ohne ein Zerkratzen der Elemente durchgeführt werden kann.

Die US 5 025 187 A beschreibt eine Reinigungsvorrichtung für die Oberfläche eines Spiegels, wobei die Reinigungsvorrichtung einen Aktuator aufweist. Der Aktuator, welcher ein piezoelektrischer Aktuator sein kann, vibriert die Oberfläche des Spiegels derart, dass Fremdkörper von der Spiegeloberfläche entfernt werden und diese somit gereinigt wird.

Die US 2010/246001 A1 offenbart eine optische Vorrichtung mit einem vibrierenden Element und einem piezoelektrischen Element. Das piezoelektrische Element versetzt das vibrierende Element in Vibration in einem vorbestimmten Vibrationsmodus, um eine an einer Oberfläche des vibrierten Elements haftende Fremdsubstanz zu entfernen. Eine Ansteuerelektrode, eine erste Schwingungserfassungselektrode und eine zweite Schwingungserfassungselektrode sind an einer ersten Fläche des piezoelektrischen Elements vorgesehen, und eine Masseelektrode ist an einer zweiten Fläche des piezoelektrischen Elements vorgesehen. Die erste Schwingungserfassungselektrode und die zweite Schwingungserfassungselektrode haben eine achsensymmetrische Form und sind auf der ersten Fläche des piezoelektrischen Elements so angeordnet, dass sie symmetrisch in Bezug auf eine Achse angeordnet sind.

Die US 2012/262667 A1 beschreibt eine erste Vorrichtung mit einem Linsengehäuse, das angepasst ist, um eine erste Linse und eine zweite Linse zu tragen, ein erster beweglich mit dem Linsengehäuse verbundener Bügel, ein mit dem Linsengehäuse bewegbar gekoppelter zweiter Bügel, ein Elektronikmodul, das zumindest teilweise innerhalb des ersten Bügels angeordnet ist und einen ersten elektrischen Leiter, der mit dem ersten Bügel verbunden ist. Ein erster leitender Pfad kann von dem ersten Bügel zu dem Linsengehäuse zumindest teilweise durch den ersten elektrischen Leiter bereitgestellt werden. Der erste elektrische Leiter kann dazu ausgelegt sein, das Elektronikmodul mit dem ersten Bügel zu koppeln.

Vorliegend gilt das Interesse der Reinigung einer Kopfobenanzeigeeinrichtung (HUD - Head-up-Display). Die Kopfobenanzeigeeinrichtung ist ein Anzeigesystem, bei dem ein Fahrer eines Kraftfahrzeugs seine Kopfhaltung beziehungsweise Blickrichtung auf die Fahrbahn beibehalten kann, weil die Informationen in sein Sichtfeld projiziert werden. Die Kopfobenanzeigeeinrichtung kann mit dem aus dem Stand der Technik bekannten Verfahren nur unvollständig gereinigt werden. So ist die Kopfobenanzeigeeinrichtung üblicherweise dadurch charakterisiert, dass eine Optik und eine Bildgebereinheit innerhalb eines Gehäuses angeordnet sind. So können Partikel, beispielsweise in Form von Staub, durch Spaltöffnungen des Gehäuses in das Gehäuse eintreten. Die Kopfobenanzeigeeinrichtung kann durch eine Abdeckeinrichtung wie im Stand der Technik also nur unvollständig gereinigt werden.

Es ist Aufgabe der Erfindung, ein Verfahren, eine Kopfobenanzeigeeinrichtung sowie ein Kraftfahrzeug zu schaffen, mit welchem beziehungsweise bei welchem eine Reinigung der Kopfobenanzeigeeinrichtung gründlicher und vollständiger durchgeführt werden kann. Diese Aufgabe wird erfindungsgemäß durch ein Verfahren, durch eine Kopfobenanzeigeeinrichtung sowie durch ein Kraftfahrzeug mit den Merkmalen gemäß den jeweiligen unabhängigen Ansprüchen gelöst.

Bei einem erfindungsgemäßen Verfahren wird eine Kopfobenanzeigeeinrichtung eines Kraftfahrzeugs gereinigt. Es werden bauteilfremde Partikel von zumindest einem Bauteil der Kopfobenanzeigeeinrichtung flüssigkeitslos entfernt und die Kopfobenanzeigeeinrichtung wird dadurch zumindest teilweise gereinigt. Als ein wesentlicher Gedanke der Erfindung wird das zumindest eine Bauteil der Kopfobenanzeigeeinrichtung durch eine Rütteleinheit der Kopfobenanzeigeeinrichtung definiert und gewollt ruckartig bewegt, und die bauteilfremden Partikel werden durch die ruckartige Bewegung entfernt.

Durch das erfindungsgemäße Verfahren kann das Reinigen der Kopfobenanzeigeeinrichtung gründlicher und vollständiger durchgeführt werden.

So kann durch das Rütteln beispielsweise jedes Bauteil der Kopfobenanzeigeeinrichtung separat ruckartig bewegt werden. Es können somit auch schwer zugängliche Bereiche der Bauteile gereinigt werden. Weiterhin kann durch das ruckartige Bewegen und somit einem quasi kontaktlosen Reinigen auch ein Verkratzen des Bauteils verhindert werden. Durch das ruckartige Bewegen des Bauteils kann beispielsweise auf ein das Bauteil abwischendes Reinigungselement verzichtet werden. Bei dem Abwischen beziehungsweise flächigen Berühren des Bauteils mit dem Reinigungselement kann beispielsweise das zuvor beschriebene Verkratzen entstehen, indem die Partikel auf dem Bauteil durch das Reinigungselement verrieben werden. Durch das Verreiben kann eine Art Scheuerwirkung entstehen. Diese Scheuerwirkung wird durch das Reinigen mit der ruckartigen Bewegung vermieden.

Die ruckartige Bewegung des Bauteils beziehungsweise der Kopfobenanzeigeeinrichtung wird bereitgestellt, indem die Rütteleinheit mit dem Bauteil beziehungsweise der Kopfobenanzeigeeinrichtung verbunden ist. So wird von der Rütteleinheit insbesondere Energie auf das Bauteil übertragen. Die Rütteleinheit kann also beispielsweise als Aktor ausgebildet sein.

Die ruckartige Bewegung ist insbesondere derart ausgestaltet, dass die Partikel von dem Bauteil in die Luft geschleudert werden und somit den Kontakt zu dem Bauteil verlieren. Die ruckartige Bewegung wird insbesondere impulsweise beziehungsweise stoßweise mehrmals hintereinander durchgeführt. So kann es beispielsweise sein, dass die Partikel bei jeder ruckartigen Bewegung von dem Bauteil in die Luft geschleudert werden und an einer anderen Position des Bauteils, insbesondere an einer Position weiter an dem Rand des Bauteils zum Liegen kommen. Bei einem nächsten Impuls der ruckartigen Bewegung, kann es nun sein, dass die zuvor an den Rand des Bauteils geschleuderten Partikel endgültig von dem Bauteil weggeschleudert werden.

Insbesondere ist es vorgesehen, dass die ruckartige Bewegung durch eine vorbestimmte Amplitude und/oder eine vorbestimmte Frequenz charakterisiert wird, die durch die Rütteleinheit vorgegeben wird. So kann es beispielsweise vorgesehen sein, dass die ruckartige Bewegung dadurch charakterisiert ist, dass die Partikel im Wesentlichen durch die Amplitude entfernt werden und die ruckartige Bewegung mit einer relativ niedrigen, beispielsweise bis zu 100 Hz, Frequenz durchgeführt wird. Alternativ kann die ruckartige Bewegung die bauteilfremden Partikel aber beispielsweise auch im Wesentlichen durch die vorbestimmte Frequenz entfernen. Dabei kann die Amplitude beispielsweise relativ niedrig ausgebildet sein, während die Frequenz im Ultraschallbereich mit zumindest 16 kHz vorliegen kann. Vorteilhaft ist also, dass die Amplitude und/oder die Frequenz der ruckartigen Bewegung durch die Rütteleinheit vielfältig und situationsspezifisch beziehungsweise bauteilspezifisch vorgegeben werden kann. So kann beispielsweise für jedes Bauteil der Kopfobenanzeigeeinrichtung eine unterschiedliche Frequenz und/oder Amplitude zur Entfernung der Partikel genutzt werden.

Vorzugsweise ist vorgesehen, dass die ruckartige Bewegung mit einer Frequenz im Schallbereich, insbesondere im Ultraschallbereich, durchgeführt wird. So fängt der Schallbereich beispielsweise ab einer Frequenz von 16 Hz an. Der Ultraschallbereich beginnt beispielsweise bei 16 kHz und umfasst von da ab höhere Frequenzen. Durch die Frequenz im Schallbereich, insbesondere im Ultraschallbereich, können die Partikel effektiv und gründlich von dem Bauteil entfernt werden. Die Partikel werden dadurch effektiv abgeschüttelt beziehungsweise in die Luft katapultiert, um von dort an einer anderen Position, abhängig von der Dauer und/oder Intensität der ruckartigen Bewegung, gesammelt zu werden. Die ruckartige Bewegung kann in diesem Fall beispielsweise auch als Vibration des Bauteils beschrieben werden.

Weiterhin ist es vorzugsweise vorgesehen, dass das Bauteil mit einer antistatischen Schicht bereitgestellt wird und die an der Schicht vorhandenen Partikel durch die ruckartige Bewegung entfernt werden. Die antistatische Schicht kann beispielsweise fest mit dem Bauteil verbunden sein und/oder als eine Oberfläche des Bauteils bereitgestellt werden. Die antistatische Schicht ist insbesondere dadurch charakterisiert, dass die Partikel weniger stark an dem Bauteil anhaften, als dies ohne die antistatische Schicht an dem Bauteil der Fall wäre. Durch die antistatische Schicht kann also verhindert werden, dass sich die Oberfläche des Bauteils und die Partikel aufgrund von unterschiedlicher Aufladung anziehen. Durch die antistatische Schicht können die Partikel einfacher und effektiver durch die ruckartige Bewegung von dem Bauteil entfernt werden.

Ebenfalls vorzugsweise ist vorgesehen, dass durch die Kopfobenanzeigeeinrichtung eine Mehrzahl von Bauteilen umfasst wird, und die Bauteile voneinander unabhängig ruckartig bewegt werden. So kann die Rütteleinheit beispielsweise mit mehreren Bauteilen verbunden sein und diese ruckartig bewegen. Es kann aber auch sein, dass mehrere Rütteleinheiten in der Kopfobenanzeigeeinrichtung angeordnet sind, und jede der Rütteleinheiten mit einem individuell zugewiesenen Bauteil verbunden ist, um dieses in ruckartige Bewegung zu versetzen. So können beispielsweise Bauteile, welche stärker verschmutzen, bei der Reinigung bevorzugt werden. Ebenso kann die Rütteleinheit somit individuell für das jeweilige Bauteil ausgelegt sein und dementsprechend eingestellt werden. So können beispielsweise verschiedene Bauteile auch in verschiedene ruckartige Bewegungen versetzt werden.

Vorzugsweise kann es aber auch vorgesehen sein, dass von der Kopfobenanzeigeeinrichtung eine Mehrzahl von Bauteilen umfasst wird, und die Mehrzahl der Bauteile gemeinsam und aneinandergekoppelt ruckartig bewegt wird. So kann beispielsweise die gesamte Kopfobenanzeigeeinrichtung ruckartig bewegt werden. Für das gesamte ruckartige Bewegen kann beispielsweise eine einzige Rütteleinheit ausreichen. So kann beispielsweise anstatt mehreren kleinen Rütteleinheiten nur eine große Rütteleinheit genutzt werden, welche mit der gesamten Kopfobenanzeigeeinrichtung verbunden ist. Das Reinigen der gesamten Kopfobenanzeigeeinrichtung kann somit also effektiv und einfach durchgeführt werden.

Insbesondere ist vorgesehen, dass die bauteilfremden Partikel durch die ruckartige Bewegung zu einer Partikelsammelstelle der Kopfobenanzeigeeinrichtung befördert werden. Die Partikelsammelstelle kann beispielsweise als eine Auffangmatte ausgebildet sein. Die Auffangmatte kann beispielsweise eine Klebefläche aufweisen und/oder elektrostatisch aufgeladen sein. Durch die Klebefläche und/oder die elektrostatische Aufladung können die Partikel an die Partikelsammelstelle gebunden werden. Es kann dadurch verhindert werden, dass die zu der Partikelsammelstelle beförderten Partikel von dort wieder zu dem Bauteil gelangen. Die Partikelsammelstelle kann beispielsweise unterhalb des Bauteils angeordnet sein. Unterhalb bedeutet, dass die Partikel durch die Schwerkraft, wenn diese von dem Bauteil abgeschüttelt werden, auf die Partikelsammelstelle herabfallen. Weiterhin kann die Partikelsammelstelle beispielsweise aber auch mit einem Gebläse oder einem Luftzug befördert werden. Ziel der Partikelsammelstelle kann es sein, dass die Partikel dort gesammelt werden, um ein erneutes Verschmutzen der Bauteile durch die Partikel zu vermeiden und/oder, um eine zentrale Vorrichtung für die Kopfobenanzeigeeinrichtung bereitzustellen, um die Partikel in vorbestimmten Abständen aus der Kopfobenanzeigeeinrichtung und/oder dem Kraftfahrzeug zu entfernen.

Erfindungsgemäß ist vorgesehen, dass durch die Kopfobenanzeigeeinrichtung ein Grad der Verschmutzung bestimmt wird, und dadurch eine Zeitdauer und/oder eine Frequenz und/oder eine Amplitude und/oder ein Aktivierungszeitpunkt der ruckartigen Bewegung bestimmt wird. So kann der Grad der Verschmutzung beispielsweise anhand einer Analyse eines mit einer Kamera aufgenommenen Bilds des Bauteils bestimmt werden. So lässt sich die Zeitdauer und/oder die Frequenz und/oder die Amplitude und/oder der Aktivierungszeitpunkt dementsprechend einstellen, dass der Grad der Verschmutzung unterhalb eines vorbestimmten Verschmutzungsgrenzwertes bestimmt wird. So kann der Aktivierungszeitpunkt beispielsweise bei einem Aktivieren beziehungsweise einem Einschaltvorgang der Kopfobenanzeigeeinrichtung vorgesehen sein. Ergänzend oder alternativ kann der Aktivierungszeitpunkt aber auch während des Betriebs der Kopfobenanzeigeeinrichtung erfolgen, falls der Grad der Verschmutzung dies erfordert. Durch das Bestimmen des Grads der Verschmutzung kann die Kopfobenanzeigeeinrichtung beziehungsweise das Bauteil also situationsspezifisch angemessen gereinigt werden.

Die Erfindung betrifft auch eine Kopfobenanzeigeeinrichtung mit zumindest einem Bauteil und einer Reinigungseinrichtung zum flüssigkeitslosen Entfernen von Partikeln. Ein wesentlicher Gedanke der Erfindung ist, dass die Reinigungseinrichtung mit einer Rütteleinheit zur Erzeugung von ruckartigen Bewegungen ausgebildet ist und die Partikel durch die ruckartigen Bewegungen entfernbar sind. So kann die Rütteleinheit beispielsweise als ein Aktor ausgebildet sein, welcher die ruckartigen Bewegungen an das Bauteil abgibt. Ergänzend oder alternativ kann die Rütteleinheit auch als piezoelektrisches Element ausgebildet sein. So kann die ruckartige Bewegung des Bauteils beispielsweise auch durch Resonanz hervorgerufen werden. Die Resonanz kann beispielsweise durch das Anlegen einer Wechselspannung an das piezoelektrische Element ausgelöst werden. Durch die ruckartige Bewegung können die Partikel, insbesondere Staub, von dem Bauteil weggeschleudert werden.

Weiterhin kann es vorgesehen sein, dass das Bauteil in ein vibrationsdämpfendes Element, beispielsweise Gummi, eingefasst ist und die ruckartigen Bewegungen, welche von der Rütteleinheit an das Bauteil abgegeben werden, dadurch nicht an benachbarte Bauteile, insbesondere der Kopfobenanzeigeeinrichtung, abgegeben werden.

Weiterhin kann es vorgesehen sein, dass die Rütteleinheit als zumindest ein Aktor ausgebildet ist, durch welchen das zumindest eine Bauteil ruckartig bewegbar ist. Durch den Aktor kann also insbesondere eine mechanische Bewegung oder eine andere physikalische Größe an das Bauteil übertragen werden. Somit kann das Bauteil durch den Aktor in einfacher Weise in ruckartige Bewegung versetzt werden.

Weiterhin ist es vorzugsweise vorgesehen, dass das Bauteil als eine Bildgebeeinheit und/oder ein Gehäuse und/oder ein Faltspiegel und/oder ein Schutzelement und/oder ein Kombinierspiegel ausgebildet ist. Das Schutzelement ist insbesondere als Schutz für die Bildgebeeinheit, beispielsweise eine Flüssigkristallanzeige, vorgesehen. So ist das Schutzelement beispielsweise als eine Folie ausgebildet, welche beispielsweise aus Kunststoff und/oder Glas ausgebildet sein kann. Das Schutzelement weist vorzugsweise eine antistatische Eigenschaft auf. Weiterhin kann das Schutzelement beispielsweise beabstandet von dem Bauteil, insbesondere der Bildgebeeinheit, angeordnet sein. So kann das Schutzelement beispielsweise derart bezüglich der Bildgebeeinheit angeordnet sein, dass die Bildgebeeinheit von außerhalb der Kopfobenanzeigeeinrichtung hermetisch abgeschirmt ist. Es kann also beispielsweise durch das Schutzelement verhindert werden, dass sich die Partikel direkt auf das Bauteil, insbesondere der Bildgebeeinheit, ablagern. Somit ermöglicht die Schutzschicht beziehungsweise das Schutzelement, dass die Bildgebeeinheit selbst von der Reinigung ausgeschlossen werden kann und nur das Schutzelement zu reinigen ist. Weiterhin vorteilhaft ist, dass sich das Schutzelement einfacher in die ruckartigen Bewegungen versetzen lässt, als dies bei der Bildgebeeinheit der Fall ist. Die Bildgebeeinheit und/oder der Faltspiegel und/oder das Schutzelement und/oder der Kombinierspiegel sind insbesondere mit dem Gehäuse verbunden. Die Bildgebeeinheit und/oder das Gehäuse und/oder der Faltspiegel und/oder das Schutzelement und/oder der Kombinierspiegel können jeweils mit einem vibrationsdämpfenden Element eingefasst sein, damit die ruckartige Bewegung des jeweiligen Bauteils nicht auf andere Bauteile der Kopfobenanzeigeeinrichtung und/oder des Kraftfahrzeugs übertragen wird.

Weiterhin kann es vorgesehen sein, dass der Kombinierspiegel als ein von einer Windschutzscheibe des Kraftfahrzeugs unterschiedliches Flächenelement ausgebildet ist. Der Kombinierspiegel ist vorzugsweise als semitransparente Spiegelfläche ausgebildet. Der Kombinierspiegel wird auch als Combiner beschrieben und ist für das Fusionieren von Information aus einem Umgebungsbereich des Kraftfahrzeugs und von Information der Bildgebeeinheit vorgesehen. Der Kombinierspiegel ist also zumindest teilweise reflektierend für die Information von der Bildgebeeinheit und transparent für die Information aus dem Umgebungsbereich. Durch das von der Windschutzscheibe beziehungsweise Frontscheibe separate Vorliegen des Kombinierspiegels, kann der Kombinierspiegel durch die Rütteleinheit in ruckartige Bewegungen versetzt werden. Die Reinigung des Kombinierspiegels kann somit einfacher und effektiver durchgeführt werden.

Alternativ kann der Kombinierspiegel jedoch auch durch die Windschutzscheibe des Kraftfahrzeugs oder eine andere Projektionsfläche des Kraftfahrzeugs bereitgestellt werden und somit von dem Rütteln beziehungsweise der ruckartigen Bewegung ausgenommen sein.

Ein erfindungsgemäßes Kraftfahrzeug, insbesondere ein Personenkraftwagen, umfasst eine erfindungsgemäße Kopfobenanzeigeeinrichtung oder eine vorteilhafte Ausführung davon.

Die mit Bezug auf das erfindungsgemäße Verfahren vorgestellten bevorzugten Ausführungsformen und deren Vorteile gelten entsprechend für die erfindungsgemäße Kopfobenanzeigeeinrichtung sowie für das erfindungsgemäße Kraftfahrzeug.

Mit den Angaben "oben", "unten", "horizontal", "vertikal", "Front", "Heck" etc. sind die bei bestimmungsgemäßem Gebrauch und bestimmungsgemäßem Anordnen der Bauteile und/oder der Kopfobenanzeigeeinrichtung am Kraftfahrzeug und bei einem dann vor dem Bauteil und/oder der Kopfobenanzeigeeinrichtung stehenden und in Richtung des Bauteils und/oder der Kopfobenanzeigeeinrichtung blickenden Beobachter gegebenen Positionen und Orientierungen angegeben.

Die Ausführungsbeispiele der Erfindung werden nachfolgend anhand schematischer Zeichnungen näher erläutert.

Dabei zeigen:
- Fig. 1: in schematischer Draufsicht ein Ausführungsbeispiel eines erfindungsgemäßen Kraftfahrzeugs mit einer Kopfobenanzeigeeinrichtung;
- Fig. 2: eine schematische Darstellung einer erfindungsgemäßen Kopfobenanzeigeeinrichtung mit einem Schutzelement, welches beabstandet zu einer Bildgebeeinheit der Kopfobenanzeigeeinrichtung angeordnet ist;
- Fig. 3: eine weitere schematische Darstellung einer erfindungsgemäßen Kopfobenanzeigeeinrichtung;
- Fig. 4: eine weitere schematische Darstellung einer erfindungsgemäßen Kopfobenanzeigeeinrichtung mit zwei Zwischenspiegeln; und
- Fig. 5: eine weitere schematische Darstellung einer Kopfobenanzeigeeinrichtung mit einer Windschutzscheibe des Kraftfahrzeugs als Kombinierspiegel.

In den Figuren werden gleiche oder funktionsgleiche Elemente mit den gleichen Bezugszeichen versehen.

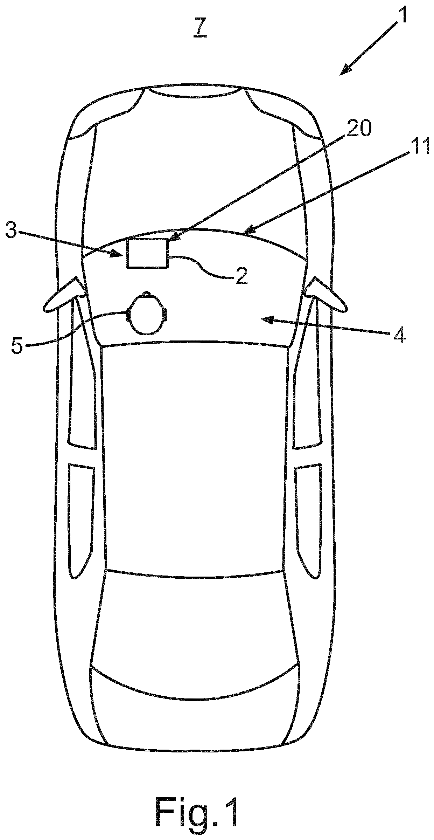

In Fig. 1 ist schematisch eine Draufsicht auf ein Kraftfahrzeug 1 mit einer Kopfobenanzeigeeinrichtung 2 gemäß einer Ausführungsform der Erfindung dargestellt. Die Kopfobenanzeigeeinrichtung umfasst eine Reinigungseinrichtung 20. Die Kopfobenanzeigeeinrichtung 2 ist im Ausführungsbeispiel in einem Cockpit 3 eines Innenraums 4 des Kraftfahrzeugs 1 angeordnet. Die Anordnung der Kopfobenanzeigeeinrichtung 2 ist jedoch vielfältig möglich, vorzugsweise allerdings so, dass die Kopfobenanzeigeeinrichtung 2 von einem Nutzer 5 des Kraftfahrzeugs 1, insbesondere dem Fahrer des Kraftfahrzeugs 1, genutzt werden kann.

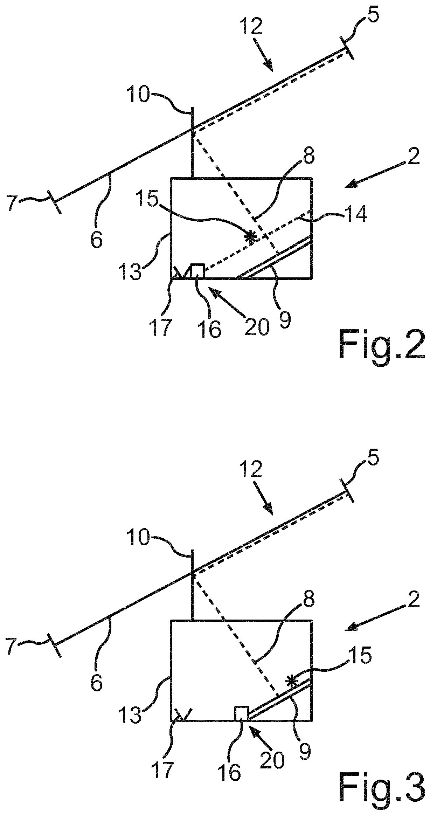

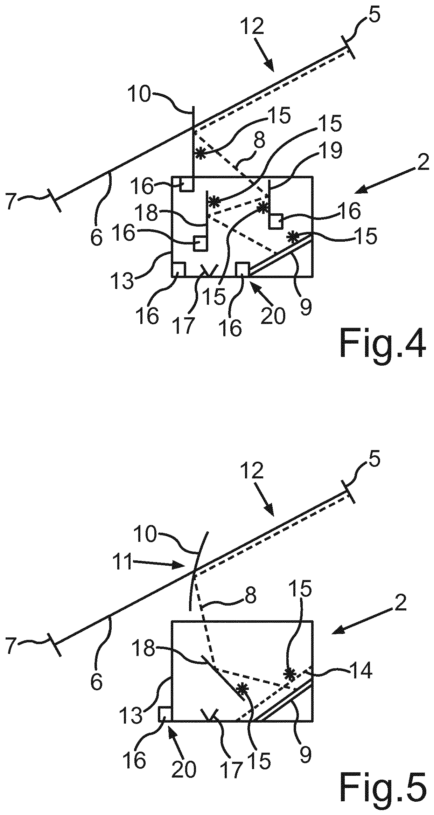

Fig. 2 zeigt die Kopfobenanzeigeeinrichtung 2. Durch die Kopfobenanzeigeeinrichtung 2 wird eine Umgebungsinformation 6 eines Umgebungsbereichs 7 des Kraftfahrzeugs 1 mit einer Bildinformation 8 einer Bildgebeeinheit 9 der Kopfobenanzeigeeinrichtung 2 fusioniert. Die Umgebungsinformation 6 und die Bildinformation 8 werden auf einem Kombinierspiegel 10 der Kopfobenanzeigeeinrichtung 2 kombiniert beziehungsweise fusioniert. Der Kombinierspiegel 10 kann beispielsweise, wie in Fig. 2 gezeigt, als separate Einheit vorliegen oder aber, wie in Fig. 5 gezeigt, durch eine Windschutzscheibe 11 des Kraftfahrzeugs ausgebildet sein. Eine kombinierte Information 12 aus der Umgebungsinformation 6 und der Bildinformation 6 wird durch den Kombinierspiegel 10 an den Nutzer 5 ausgegeben.

Weiterhin umfasst die Kopfobenanzeigeeinrichtung 2 ein Gehäuse 13, in welchem beziehungsweise an welchem Bauteile der Kopfobenanzeigeeinrichtung 2 angeordnet sind. Der Kombinierspiegel 10 kann beispielsweise bei deaktivierter Kopfobenanzeigeeinrichtung 2 in dem Gehäuse 13 versenkt werden.

Weiterhin weist die Kopfobenanzeigeeinrichtung 2 gemäß Fig. 2 ein Schutzelement 14 auf. Das Schutzelement 14 kann beispielsweise als Folie oder als sonstiges Element aus Kunststoff oder Glas ausgebildet sein. Das Schutzelement 14 ist insbesondere zum Schutz der Bildgebeeinheit 9 in dem Gehäuse 13 der Kopfobenanzeigeeinrichtung 2 angeordnet. So kann die Bildgebeeinheit 9 beispielsweise durch das Schutzelement 14 hermetisch abgeriegelt sein. Somit kann verhindert werden, dass Partikel 15 zu der Bildgebeeinheit 9 vordringen können. Die Partikel 15 werden also durch das Schutzelement 14 von dem Vordringen zu der Bildgebeeinheit 9 abgehalten.

Gemäß Fig. 2 ist an dem Schutzelement 14 eine Rütteleinheit 16 angeordnet. Die Rütteleinheit 16 wird von der Reinigungseinrichtung 20 umfasst. Durch die Rütteleinheit 16 wird das Schutzelement 14 ruckartig bewegt. Die ruckartige Bewegung kann beispielsweise mit einer Frequenz im Ultraschallbereich, beispielsweise größer als 16 kHz, ausgeführt werden. Die ruckartige Bewegung kann allerdings auch durch eine vielfältige Frequenz und/oder eine vielfältige Amplitude charakterisiert sein. Vorzugsweise ist die Frequenz und/oder die Amplitude der ruckartigen Bewegung derart charakterisiert, dass dadurch die Partikel 15 von dem Schutzelement 14 abgeschüttelt werden. Die Partikel 15 können beispielsweise in Form von Staub vorliegen und somit beispielsweise eine Korngröße von einem Mikrometer aufweisen.

Die ruckartige Bewegung kann beispielsweise auch dadurch herbeigeführt werden, dass die Rütteleinheit 16 als Aktor, insbesondere als piezoelektrisches Element, ausgebildet ist. Die ruckartige Bewegung beziehungsweise die Vibration wird dann durch Resonanz hervorgerufen. Die Resonanz wird durch das Anlegen einer Wechselspannung mit der bevorzugten Frequenz für die ruckartige Bewegung an das piezoelektrische Element beziehungsweise die Rütteleinheit 16 ausgelöst. Es entstehen so beispielsweise Biegevibrationen des an die Rütteleinheit 16 angebundenen Schutzelements 14. Durch die Biegevibrationen können die Partikel 15 von dem Schutzelement 14 weggeschleudert beziehungsweise entfernt werden.

Die weggeschleuderten Partikel 15 werden dann vorzugsweise in eine Partikelsammelstelle 17 befördert und dort aufgefangen. Die Partikelsammelstelle 17 kann beispielsweise als Auffangmatte mit einer Klebefläche ausgebildet sein. Die Partikelsammelstelle 17 kann aber auch ergänzend oder alternativ elektrostatisch aufgeladen sein. Zweck ist es, dass die Partikel 15, welche der Partikelsammelstelle zugeführt wurden, dort verbleiben und nicht wieder in das Gehäuse 13 der Kopfobenanzeigeeinrichtung 2 entweichen. Ein erneutes Verschmutzen der Kopfobenanzeigeeinrichtung 2 kann dadurch verhindert werden und es wird eine zentrale Stelle zum Entleeren der Partikel 15 durch die Partikelsammelstelle 17 bereitgestellt.

Die Rütteleinheit 16 kann aber beispielsweise auch als Motor ausgebildet sein. Hierbei kann die Rütteleinheit 16 beispielsweise mechanische ruckartige Bewegungen an das jeweilige Bauteil, beispielsweise das Schutzelement 14, abgeben.

Die Bildgebeeinheit 9 kann beispielsweise als eine Flüssigkristallanzeige oder als Laser ausgebildet sein. Durch das Entfernen der Partikel 15 von dem Schutzelement 14 kann die Bildinformation 8 mit einer höheren Qualität bereitgestellt werden. Die höhere Qualität umfasst sowohl eine höhere Intensität als eine fehlerfreiere Bereitstellung. Je weniger Partikel 15 zwischen der Bildgebeeinheit 9 und dem Nutzer 5, also entlang der Ausbreitung der Bildinformation 8, angeordnet sind, desto besser kann die Bildinformation 8 und/oder die kombinierte Information 12 für den Nutzer 5 bereitgestellt werden.

Das Schutzelement 14 kann darüber hinaus beispielsweise ergänzend oder alternativ mit einer mikro- oder nanostrukturierten superhydrophoben Oberfläche nach Vorbild des Lotuseffekts bereitgestellt werden. Die superhydrophobe Oberfläche kann beispielsweise durch eine Nanoversiegelung des Schutzelements 14 bereitgestellt werden. Durch die superhydrophobe Oberfläche kann das Anhaften der Partikel 15 erschwert werden. Somit können die Partikel 15 auch leichter durch die ruckartige Bewegung von dem jeweiligen Bauteil beziehungsweise dem Schutzelement 14 abgeschüttelt beziehungsweise entfernt werden.

Fig. 3 zeigt die Kopfobenanzeigeeinrichtung 2 wie in Fig. 2 beschrieben, jedoch ohne das Schutzelement 14. Gemäß Fig. 3 ist die Rütteleinheit 16 direkt an der Bildgebeeinheit 9 angeordnet. Die Partikel 15 können also somit auch von der Bildgebeeinheit 9 selbst durch die ruckartige Bewegung abgeschüttelt werden. Vorzugsweise werden die Partikel 15 auch hier durch das ruckartige Bewegen der Partikelsammelstelle 17 zugeführt.

Fig. 4 zeigt die Kopfobenanzeigeeinrichtung 2 analog zu Fig. 2, wobei die Bildinformation 8 über einen Faltspiegel 18 und einen weiteren Faltspiegel 19 abgelenkt wird. Der Faltspiegel 18 und/oder der weitere Faltspiegel 19 kann beispielsweise aus Aluminium ausgebildet werden. Der Faltspiegel 18 und/oder der weitere Faltspiegel 19 kann auch die Funktion eines Zwischenspiegels oder eines Freiformflächenspiegels erfüllen. Durch den Faltspiegel 18 und/oder den weiteren Faltspiegel 19 kann die Bildinformation 8 - ebenso wie durch den Kombinierspiegel 10 - vergrößert oder verkleinert werden. Somit kann durch das Vergrößern der Bildinformation 8 eine ursprünglich von der Bildgebeeinheit 9 ausgegebene Bildinformation 8 für den Nutzer 5 größer bereitgestellt werden. Gemäß dem Ausführungsbeispiel von Fig. 4 ist die Rütteleinheit 16 jeweils an dem Kombinierspiegel 10, dem Gehäuse 13, der Bildgebeeinheit 9, dem Faltspiegel 18 und dem weiteren Faltspiegel 19 angeordnet. Somit können die Bauteile 9, 10, 13, 18, 19 voneinander unabhängig ruckartig bewegt werden. Die Bauteile 9, 10, 13, 18, 19, insbesondere die Bildgebeeinheit 9, der Kombinierspiegel 10, das Gehäuse 13, der Faltspiegel 18 und der weitere Faltspiegel 19, können dadurch also individuell und beispielsweise abhängig von einem Grad der Verschmutzung unabhängig voneinander gereinigt werden. Sämtliche Partikel 15, welche von den Bauteilen 9, 10, 13, 18, 19 entfernt werden, können durch die Partikelsammelstelle 17 aufgefangen werden. Das Ausführungsbeispiel gemäß Fig. 4 kann beispielsweise auch das Schutzelement 14 umfassen.

Fig. 5 zeigt die Kopfobenanzeigeeinrichtung 2, wobei die Rütteleinheit 16 derart an der Kopfobenanzeigeeinrichtung 2, insbesondere dem Gehäuse 13, angeordnet ist, dass die gesamte Kopfobenanzeigeeinrichtung 2 und alle Bauteile 13, 14, 18 gemeinsam ruckartig bewegt werden. Der Partikelsammelstelle 17 können also die Partikel 15 von allen Bauteilen 13, 14, 18 durch ruckartiges Bewegen mit nur einer Rütteleinheit 16 zugebracht werden. Gemäß dem Ausführungsbeispiel von Fig. 5 ist der Kombinierspiegel 10 durch die Windschutzscheibe 11 des Kraftfahrzeugs 1 charakterisiert. Der Kombinierspiegel 10 kann aber ebenso als von der Windschutzscheibe 11 unterschiedliches Flächenelement ausgebildet sein. Das Reinigen der Kopfobenanzeigeeinrichtung 2 durch die ruckartige Bewegung mittels der Rütteleinheit 16 kann also beispielsweise bei integrierten Kopfobenanzeigeeinrichtungen oder ebenso bei Kopfobenanzeigeeinrichtungen mit einem separaten Kombinierspiegel genutzt werden.

## Patentansprüche

1. Verfahren zum Reinigen einer Kopfobenanzeigeeinrichtung (2) eines Kraftfahrzeugs (1), bei welchem bauteilfremde Partikel (15) von zumindest einem Bauteil (9, 10, 13, 14, 18, 19) der Kopfobenanzeigeeinrichtung (2) flüssigkeitslos entfernt werden, und die Kopfobenanzeigeeinrichtung (2) dadurch zumindest teilweise gereinigt wird, **dadurch gekennzeichnet, dass**
das zumindest eine Bauteil (9, 10, 13, 14, 18, 19) der Kopfobenanzeigeeinrichtung (2) durch eine Rütteleinheit (16) der Kopfobenanzeigeeinrichtung (2) ruckartig bewegt wird, und die bauteilfremden Partikel (9, 10, 13, 14, 18, 19) durch die ruckartige Bewegung entfernt werden, und dass durch die Kopfobenanzeigeeinrichtung (2) ein Grad der Verschmutzung bestimmt wird, und abhängig davon eine Zeitdauer und/oder eine Frequenz und/oder eine Amplitude und/oder ein Aktivierungszeitpunkt der ruckartigen Bewegung bestimmt wird.

2. Verfahren nach Anspruch 1,
**dadurch gekennzeichnet, dass**
die ruckartige Bewegung durch eine vorbestimmte Amplitude und/oder eine vorbestimmte Frequenz charakterisiert wird, die durch die Rütteleinheit (16) vorgegeben wird.

3. Verfahren nach Anspruch 1 oder 2,
**dadurch gekennzeichnet, dass**
die ruckartige Bewegung mit einer Frequenz im Schallbereich, insbesondere im Ultraschallbereich, durchgeführt wird.

4. Verfahren nach einem der vorhergehenden Ansprüche,
**dadurch gekennzeichnet, dass**
das Bauteil (9, 10, 13, 14, 18, 19) mit einer antistatischen Schicht bereitgestellt wird und die an der Schicht vorhandenen Partikel (15) durch die ruckartige Bewegung entfernt werden.

5. Verfahren nach einem der vorhergehenden Ansprüche,
**dadurch gekennzeichnet, dass**
durch die Kopfobenanzeigeeinrichtung (2) eine Mehrzahl von Bauteilen (9, 10, 13, 14, 18, 19) umfasst wird, und die Bauteile (9, 10, 13, 14, 18, 19) voneinander unabhängig ruckartig bewegt werden.

6. Verfahren nach einem der Ansprüche 1 bis 4,
**dadurch gekennzeichnet, dass**
von der Kopfobenanzeigeeinrichtung (2) eine Mehrzahl von Bauteilen (9, 10, 13, 14, 18, 19) umfasst wird, und die Mehrzahl der Bauteile (9, 10, 13, 14, 18, 19) gemeinsam und aneinander gekoppelt ruckartig bewegt wird.

7. Verfahren nach einem der vorhergehenden Ansprüche,
**dadurch gekennzeichnet, dass**
die bauteilfremden Partikel (15) durch die ruckartige Bewegung zu einer Partikelsammelstelle (17) der Kopfobenanzeigeeinrichtung (2) befördert werden.

8. Kopfobenanzeigeeinrichtung (2) mit zumindest einem Bauteil (9, 10, 13, 14, 18, 19) und einer Reinigungseinrichtung (20) zum flüssigkeitslosen entfernen von Partikeln (15),
**dadurch gekennzeichnet, dass**
die Reinigungseinrichtung (20) mit einer Rütteleinheit (16) zur Erzeugung von ruckartigen Bewegungen ausgebildet ist, und die Partikel (15) durch die ruckartigen Bewegungen entfernbar sind, und dass ein Grad der Verschmutzung durch die Kopfobenanzeigeeinrichtung bestimmbar ist, und abhängig davon eine Zeitdauer und/oder eine Frequenz und/oder eine Amplitude und/oder ein Aktivierungszeitpunkt der ruckartigen Bewegung bestimmbar ist.

9. Kopfobenanzeigeeinrichtung (2) nach Anspruch 8,
**dadurch gekennzeichnet, dass**
die Rütteleinheit (16) als zumindest ein Aktor ausgebildet ist, durch welchen das zumindest eine Bauteil (9, 10, 13, 14, 18, 19) ruckartig bewegbar ist.

10. Kopfobenanzeigeeinrichtung (2) nach Anspruch 8 oder 9,
**dadurch gekennzeichnet, dass**
das Bauteil (9, 10, 13, 14, 18, 19) als eine Bildgebeeinheit (9) und/oder ein Gehäuse (13) und/oder ein Faltspiegel (18, 19) und/oder ein Schutzelement (14) und/oder ein Kombinierspiegel (10) ausgebildet ist.

11. Kopfobenanzeigeeinrichtung (2) nach Anspruch 10,
**dadurch gekennzeichnet, dass**
der Kombinierspiegel (10) als ein von einer Windschutzscheibe (11) des Kraftfahrzeugs (1) unterschiedliches Flächenelement ausgebildet ist.

12. Kraftfahrzeug (1) mit einer Kopfobenanzeigeeinrichtung (2) nach einem der Ansprüche 8 bis 11.

## Claims

1. Method for cleaning a heads up display device (2) of a motor vehicle (1), in which non-component particles (15) are removed from at least one component (9, 10, 13, 14, 18, 19) of the heads up display device (2) without using liquid, and the heads up display device (2) is at least partly cleaned as a result,
**characterized in that**
at least one component (9, 10, 13, 14, 18, 19) of the heads up display device (2) is moved jerkily by a shaking unit (16) of the heads up display device (2) and the non-component particles (9, 10, 13, 14, 18, 19) are removed by the jerky movement, and **in that** a level of the soiling is determined by the heads up display device (2) and, on this basis, a time period and/or a frequency and/or an amplitude and/or an activation time of the jerky movement is determined.

2. Method according to Claim 1,
**characterized in that**
the jerky movement is **characterized by** a predetermined amplitude and/or a predetermined frequency, which are predefined by the shaking unit (16).

3. Method according to Claim 1 or 2,
**characterized in that**
the jerky movement is carried out with a frequency in the acoustic range, in particular in the ultrasound range.

4. Method according to one of the preceding claims, **characterized in that**
the component (9, 10, 13, 14, 18, 19) is provided with an antistatic layer, and the particles (15) present on the layer are removed by the jerky movement.

5. Method according to one of the preceding claims, **characterized in that**
the heads up display device (2) comprises a plurality of components (9, 10, 13, 14, 18, 19), and the components (9, 10, 13, 14, 18, 19) are moved jerkily independently of one another.

6. Method according to one of Claims 1 to 4, **characterized in that**
the heads up display device (2) comprises a plurality of components (9, 10, 13, 14, 18, 19), and the plurality of components (9, 10, 13, 14, 18, 19) are moved jerkily together and in a manner coupled to one another.

7. Method according to one of the preceding claims, **characterized in that**
the non-component particles (15) are conveyed by the jerky movement to a particle collection point (17) of the heads up display device (2).

8. Heads up display device (2) comprising at least one component (9, 10, 13, 14, 18, 19) and a cleaning device (20) for removing particles (15) without using liquid,
**characterized in that**
the cleaning device (20) is formed with a shaking unit (16) for producing jerky movements, and the particles (15) can be removed by the jerky movements, and **in that** a level of soiling can be determined by the heads up display device and, on this basis, a time period and/or a frequency and/or an amplitude and/or an activation time of the jerky movement can be determined.

9. Heads up display device (2) according to Claim 8, **characterized in that**
the shaking unit (16) is formed as at least one actuator by means of which the at least one component (9, 10, 13, 14, 18, 19) can be moved jerkily.

10. Heads up display device (2) according to Claim 8 or 9,
**characterized in that**
the component (9, 10, 13, 14, 18, 19) is formed as an imaging unit (9) and/or a housing (13) and/or a folding mirror (18, 19) and/or a protective element (14) and/or a combination mirror (10).

11. Heads up display device (2) according to Claim 10, **characterized in that**
the combination mirror (10) is formed as a surface element that is different from a windscreen (11) of the motor vehicle (1).

12. Motor vehicle (1) having a heads up display device (2) according to one of Claims 8 to 11.

## Revendications

1. Procédé de nettoyage d'un dispositif (2) d'affichage tête haute d'un véhicule automobile (1), pour enlever sans utiliser de liquide des particules étrangères (15) présentes sur au moins un composant (9, 10, 13, 14, 18, 19) du dispositif (2) d'affichage tête haute, le dispositif (2) d'affichage tête haute étant ainsi nettoyé au moins en partie,
**caractérisé en ce que**
le ou les composants (9, 10, 13, 14, 18, 19) du dispositif (2) d'affichage tête haute sont déplacés par secousses par une unité de secouage (7) du dispositif (2) d'affichage tête haute et les particules étrangères (9, 10, 13, 14, 18, 19) sont enlevées par le déplacement par secousses et
**en ce que** le dispositif (2) d'affichage tête haute détermine un degré d'encrassement et détermine en fonction de ce dernier la fréquence, l'amplitude et/ou l'instant d'activation du déplacement par secousses.

2. Procédé selon la revendication 1, **caractérisé en ce que** le déplacement par secousses est **caractérisé par** une amplitude et/ou une fréquence prédéterminées par l'unité de secouage (16).

3. Procédé selon les revendications 1 ou 2, **caractérisé en ce que** le déplacement par secousses est réalisé à une fréquence dans la plage sonore et en particulier dans la plage ultrasonique.

4. Procédé selon l'une des revendications précédentes, **caractérisé en ce que** le composant (9, 10, 13, 14, 18, 19) est doté d'une couche antistatique et **en ce que** les particules (15) présentes sur la couche sont retirées par le déplacement par secousses.

5. Procédé selon l'une des revendications précédentes, **caractérisé en ce que** le dispositif (2) d'affichage tête haute comporte plusieurs composants (9, 10, 13, 14, 18, 19) et **en ce que** les composants (9, 10, 13, 14, 18, 19) sont déplacés par secousses indépendamment les uns des autres.

6. Procédé selon l'une des revendications 1 à 4, **caractérisé en ce que** le dispositif (2) d'affichage tête haute comporte plusieurs composants (9, 10, 13, 14, 18, 19) et **en ce que** les différents composants (9, 10, 13, 14, 18, 19) sont déplacés par secousses ensemble ou en étant accouplés les uns aux autres.

7. Procédé selon l'une des revendications précédentes, **caractérisé en ce que** les particules étrangères (15) sont transportées par le déplacement par secousses vers un emplacement (7) de collecte de particules du dispositif (2) d'affichage tête haute.

8. Dispositif (2) d'affichage tête haute présentant au moins un composant (9, 10, 13, 14, 18, 19) et un dispositif de nettoyage (20) permettant d'enlever des particules (15) sans utiliser de liquide,
**caractérisé en ce que**
le dispositif de nettoyage (20) est configuré avec une unité de secouage (16) qui forme des déplacements par secousses,
**en ce que** les particules (15) peuvent être enlevées par les déplacements par secousses,
**en ce qu'**un degré d'encrassement peut être déterminé par le dispositif d'affichage tête haute et
**en ce qu'**en fonction de ce dernier, la fréquence, l'amplitude et/ou l'instant d'activation du déplacement par secousses peuvent être déterminées.

9. Dispositif (2) d'affichage tête haute selon la revendication 8, **caractérisé en ce que** l'unité de secouage (16) est configurée en tant qu'au moins un actionneur par lequel le ou les composants (9, 10, 13, 14, 18, 19) peuvent être déplacés par secousses.

10. Dispositif (2) d'affichage tête haute selon les revendications 8 ou 9, **caractérisé en ce que** le composant (9, 10, 13, 14, 18, 19) est configuré comme unité (9) de formation d'image, boîtier (13), miroir rabattable (18, 19), élément de protection (14) et/ou miroir combiné (10).

11. Dispositif (2) d'affichage tête haute selon la revendication 10, **caractérisé en ce que** le miroir combiné (10) est configuré comme élément plat distinct du pare-brise (11) du véhicule automobile (1).

12. Véhicule automobile (1) doté d'un dispositif (2) d'affichage tête haute selon l'une des revendications 8 à 11.
